(19) Europäisches Patentamt
European Patent Office
Office européen des brevets

(11) Publication number: 0 002 355
B1

# (12) EUROPEAN PATENT SPECIFICATION

(45) Date of publication of patent specification: 19.05.82

(51) Int. Cl.³: C 08 F 8/44, C 08 C 19/20

(21) Application number: 78300686.9

(22) Date of filing: 28.11.78

## (54) Bulk neutralisation of sulfonated elastomeric polymers.

(30) Priority: 29.11.77 US 855723

(43) Date of publication of application:
13.06.79 Bulletin 79/12

(45) Publication of the grant of the patent:
19.05.82 Bulletin 82/20

(84) Designated Contracting States:
BE DE FR GB NL

(56) References cited:
FR - A - 960 585

(73) Proprietor: Exxon Research and Engineering Company
P.O.Box 390 200 Park Avenue
Florham Park New Jersey 07932 (US)

(72) Inventor: Makowski, Henry Stanislaus
2045 Winding Brook Way
Scotch Plains New Jersey (US)
Inventor: Lundberg, Robert Dean
4 Brian Drive
Bridgewater New Jersey (US)
Inventor: Bock, Jan
500 Juniper Lane
Bridgewater New Jersey (US)

(74) Representative: Field, Roger Norton et al,
Hanover Court 5 Hanover Square
London W1R OHQ (GB)

EP 0 002 355 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Bulk neutralisation of sulfonated elastomeric polymers

The present unique and novel instant invention relates to an improved process for the manufacture of filled and extended neutralized sulfonated elastomeric polymers, wherein the sulfonated elastomeric polymers are derived from olefinically unsaturated elastomeric polymers. The term "olefinically unsaturated polymer" as used in the specification means polymers both synthetic or natural having in the polymer structure sites of unsaturation whether in the backbone, pendant therefrom or cyclic, except that aromatic containing polymers are excluded from this description.

Using this process wherein the formulations can be fully and homogeneously mixed before neutralization one can make from formulations incorporating a lubricant and which have good processability, articles which have high shine or gloss.

In particular, unsaturated polymers used in the process of this invention include low unsaturation polymers having about 0.1 to about 10 mole percent olefinic unsaturation such as Butyl rubber, halogenated Butyl rubbers, or EPDM terpolymers. Additionally, other unsaturated polymers contemplated are: partially hydrogenated polyisoprenes, partially hydrogenated polybutadienes, isoprene-styrene copolymers, and butadiene-styrene copolymers.

The expression "Butyl rubber" as employed in the specification and claims is intended to include copolymers made from a polymerization reaction mixture having therein from 70 to 99.5% by weight of an isoolefin which has 4 to 7 carbon atoms per molecule, e.g. isobutylene and about 0.5 to 30% by weight of a conjugated multiolefin having from 4 to 14 carbon atoms per molecule, e.g. isoprene. The resulting copolymer contains 85 to 99.8% by weight of combined isoolefin and 0.2 to 15% of combined multiolefin.

Butyl rubber generally has a Staudinger molecular weight of about 20,000 to about 500,000, preferably about 25,000 to about 400,000 especially about 100,000 to about 400,000, and a Wijs Iodine No. of about 0.5 to 50, preferably 1 to 15. The preparation of Butyl rubber is described in U.S. Patent 2,356,128.

For the purposes of this invention, the Butyl rubber may have incorporated therein from about 0.2 to 10% of combined multiolefin; preferably about 0.5 to about 6%; more preferably about 1 to about 4%, e.g. 2%.

Illustrative of such a Butyl rubber is Exxon Butyl 365 (Exxon Chemical Co.), having a mole percent unsaturation of about 2.0% and a Mooney viscosity (ML, 1+8, 100°C) of about 40—50.

Halogenated Butyl rubber is available commercially and is prepared through the halogenation of Butyl rubber in solution. The preparation of halogenated Butyl rubber is described in U.S. Patent 3,099,644.

Illustrative of a halogenated Butyl rubber is Exxon Chlorobutyl 1066, a chlorinated Butyl rubber containing about 1.3 wt.% chlorine, having about 1.7 mole percent unsaturation and a viscosity average molecular weight of about 357,000.

Saturated low molecular weight Butyl rubbers, i.e. Butyl rubbers having a viscosity average molecular weight of about 5,000 to 85,000 and a mole percent unsaturation of about 3 to about 4% may be used in the process of this invention. Preferably, these polymers have a viscosity average molecular weight of about 25,000 to about 60,000.

The EPDM terpolymers are low unsaturated polymers having about 1 to about 10.0 wt.% olefinic unsaturation, more preferably about 2 to about 8, most preferably about 3 to 7, defined according to the definition as found in ASTM-D-1418-64 and is intended to mean a terpolymer containing ethylene and propylene in the backbone and a diene in the side chain. Illustrative methods for producing these terpolymers are found in U.S. Patent 3,280,082, British Patent 1,030,289 and French Patent 1,386,600. The preferred terpolymers contain about 40 to 75 wt.% ethylene and about 1 to about 10 wt.% of a diene monomer, the balance of the polymer being propylene. Preferably, the polymer contains about 50 to about 70 wt.% ethylene, e.g. 50 wt.% and about 2.6 to about 9.0 wt.% diene monomer, e.g. 5.0 wt.%. The diene monomer is preferably a non-conjugated diene. The $\bar{M}n$ of the terpolymer is preferably about 10,000 to about 200,000; more preferably, about 15,000 to about 100,000; and most preferably about 20,000 to about 60,000. The Mooney viscosity (ML, 1+8, 100°C) of the terpolymer is preferably about 5 to about 60, more preferably about 10 to about 50 and most preferably about 15 to about 40. The $\bar{M}v$ of the EPDM is preferably below about 350,000 and more preferably below 300,000. The $\bar{M}w$ of the EPDM terpolymer is preferably below about 500,000 and more preferably below about 350,000.

Illustrative of these nonconjugated diene monomers which may be used in the EPDM terpolymer are 1,4-hexadiene, dicyclopentadiene, 5-ethylidene-2-norbornene, 5-methylene-2-norbornene, 5-propenyl-2-norbornene and methyl tetrahydroindene.

A typical EPDM is Vistalon 2504 (Exxon Chemical Co.) a terpolymer having a Mooney viscosity (ML, 1+8, 100°C) of about 40 and having 50 wt.% of ethylene, 45 wt.% of propylene and 5.0 wt.% of 5-ethylidene-2-norbornene with an $\bar{M}n$ of about 47,000, and $\bar{M}v$ of about 145,000 and an $\bar{M}w$ of about 174,000. (The word 'Vistalon' is a registered Trade Mark at least in the United Kingdom.)

Vistalon 3708 (Exxon Chemical Co.) is a terpolymer having a Mooney viscosity (ML, 1+8, 127°C)

of about 45—55 and having about 64 wt.% of ethylene, about 3.3 wt.% of 5-ethylidene-2-norbornene, and about 32.7 wt.% of propylene with an $\bar{M}n$ of about 53,000, and $\bar{M}n$ of about 343,000 and an $\bar{M}v$ of about 270,000.

Vistalon 6505 (Exxon Chemical Co.) is a terpolymer having a Mooney viscosity (ML, 1+8, 127°C.) of about 45—55 and having about 53 wt.% of ethylene, about 9.0 wt.% of 5-ethylidene-2-norbornene and about 38 wt.% of propylene.

Other EPDM terpolymers Vistalon 2504-20 and Vistalon 6505-20 are derived from Vistalon 2504 and Vistalon 6505 by a controlled extrusion process, wherein the resultant Mooney viscosity at 100°C is about 20. The $\bar{M}n$ of Vistalon 2504-20 is about 26,000, the $\bar{M}v$ is about 90,000 and the $\bar{M}w$ is about 125,000.

Nordel 1320 (DuPont) is another EPDM terpolymer having a Mooney viscosity at 100°C of about 25 and having about 53 wt.% of ethylene, about 3.5 wt.% of 1,4-hexadiene, and about 43.5 wt.% of propylene. The word 'Nordel' is a registered Trade Mark at least in the United Kingdom.

The sulfonated polymers may be obtained by sulfonating an olefinically unsaturated polymer with a sulfonating agent which may be an acyl sulfate, a mixture of sulfuric acid and an acid anhydride or a sulfur trioxide donor complexed with a Lewis base containing oxygen, nitrogen, or phosphorus.

The term "sulfur trioxide donor" as used in the specification means a compound containing available sulfur trioxide. Illustrative of such sulfur trioxide donors are $SO_3$, chlorosulfonic acid, fluorosulfonic acid, sulfuric acid, oleum, etc. The term "complexing agent" as used in the specification means a Lewis base suitable for use in the practice of this invention, wherein a Lewis base is an electron pair donor. Typical Lewis bases are: dioxane, tetrahydrofuran, tetrahydrothiophene or triethyl phosphate.

The molar ratio of $SO_3$ donor to complexing agent may be as high as 15 to 1; preferably less than about 9:1; more preferably about 4:1 to about 1:1, e.g. 2:1.

The preferred solvents for preparation of the complexes of sulfur trioxide donor with complexing agents are chlorinated hydrocarbons. Illustrative of such chlorinated solvents are carbon tetrachloride, dichloroethane, chlorofrom, and methylene chloride. The complexes may also be prepared by direct addition of reagents if precautions are taken to dissipate evolved heat.

The reactions of ethereal complexes of $SO_3$ with the unsaturation of polymer chains has been found to be nonquantitative generally because they are consumed through side reactions with impurities such as water. Therefore, the use of excess complex is desirable to give the required amount of sulfonation.

Other suitable sulfonating agents are the acyl sulfates, which are selected from acetyl, propionyl, butyryl, or benzoyl sulfate, in particular acetyl sulfate. The acyl sulfate may be produced by reacting concentrated sulfuric acid with an acid anhydride or an acid halide in the presence or the absence of a solvent. For example, acetic anhydride may be reacted with sulfuric acid to form acetyl sulfate which may be used to sulfonate the polymers of this invention. If desired, acetic anhydride may be added to a solution of the polymer in a suitable solvent and sulfuric acid subsequently added to form acetyl sulfate in situ. Alternatively, acetyl sulfate may be preformed by reaction of sulfur trioxide with acetic acid in a non-reactive solvent.

It should be pointed out that neither the sulfonating agent nor the manner of sulfonation is critical, provided that the sulfonating method does not degrade the polymer backbone.

In the practice of this invention, the polymer to be sulfonated is dissolved in a suitable solvent and reacted with the sulfonating agent. The solvent medium must be a neutral one for the rubber and the sulfonating agent. The solvent is preferably an aromatic hydrocarbon, an aliphatic hydrocarbon, a cycloaliphatic hydrocarbon or a halogenated aromatic hydrocarbon. Illustrations of these solvents are: isopentane, pentane, cyclohexane, isohexane, hexane, heptane and homologues thereof, benzene, toluene, chlorobenzene or xylene. The preferred solvent is an aliphatic hydrocarbon.

Sulfonation of the polymer is conducted at a temperature between −100°C and +100°C. Sulfonation occurs when the sulfonating agent is added to the polymer solution. The sulfonating agent is dissolved in a suitable solvent, or may be added directly without solvent. With acetyl sulfate reagent it is most preferred to add acetic anhydride to the polymer cement and then sulfuric acid to prepare the acetyl sulfate reagent in situ. Reaction time may be about 1 to about 60 minutes, more preferably about 5 to about 45 and most preferably about 15 to about 30, wherein the product remains soluble throughout the reaction period.

The acid form of the sulfonated elastomer is quenched with water, or a liquid aliphatic alcohol such as methanol, ethanol or isopropanol, an aromatic hydroxyl compound such as phenol, or a cycloaliphatic alcohol such as cyclohexanol. The product can most easily be recovered by flashing off the solvent in hot water, wherein the water also decomposes the unreacted sulfonating agent. The product may also be recovered by evaporation of the solvent by a suitable means.

The wet crumb is thoroughly washed with water to remove soluble reagent components, such as sulfuric acid, acetic acid, and tetrahydrofuran, and low molecular weight, water-soluble sulfonic acids which derive from the reagent components, such as sulfoacetic acid. Washing improves the stability of the polymeric sulfonic acid and reduces the corrosiveness of the wet crumb. The water content of the screened and drained wet crumb is generally about 50 wt.% to about 80 wt.% depending upon the size

of the crumb and conditions of operation. The water content of the steam stripped polymer may be reduced through washing with low boiling ketones or alcohols, such as acetone and methanol although this is neither necessary nor preferred.

After thorough washing of the crumb of the polymeric sulfonic acid the crumb is mechanically dewatered at a temperature below about 66°C. This is readily accomplished with a variety of commercial equipment such as a two-roll mill, a dewatering extruder, an expeller, a filter press, a rotary drum filter, a Reitz V-press, and a centrifuge. Combinations of such equipment can be used to reduce the water content of the polymeric sulfonic to the desired level. It is desirable to lower the water level of the elastomeric sulfonic acid to less than about 15 wt.%, preferably less than about 10 wt.%, and most preferably less than about 5 wt.%. These lower levels of water are easily achieved through a combination of mechanical, shearing, and thermal effects.

The elastomeric sulfonated polymer is formulated and mixed with one or more fillers or a mixture thereof with extender oils and appropriate bases are added during or after the mixing step to effect at least partial neutralization of the sulfonic acid. During this compounding step the shearing required to mix the components and the temperature developed as a result of this shearing action result in further loss of moisture. Complete neutralization of the formulation is achieved during fabrication such as a molding or extrusion process at elevated temperature into a useful end product. The molded or extruded article is essentially totally free of moisture at the end of the molding or extrusion cycles. In cases where the formulated and fully neutralized product has sufficiently low melt viscosity for refabrication, the formulated product can be extruded and pelletized, and the resultant pellets can be further dried if necessary to achieve the desired level of moisture.

The elastomeric polymeric acid is soluble in a variety of solvent combinations, for example, toluene with a minor amout of methanol. This solubility demonstrates that sulfonation has occurred without crosslinking. The sulfonic acid-containing polymers have improved physical properties over those of the unsulfonated polymers which is attributable to the hydrogen bonding of the sulfonic acid groups.

The amount of desirable sulfonation depends on the particular application. However the amount of sulfonation must be 5 to 60 meq. $SO_3H$/100 g, preferably 10 to about 60 meq. $SO_3H$/100 g of polymer, more preferably at about 15 to about 50 meq. $SO_3H$/100 g of polymer and most preferably at about 20 to about 40 meq. $SO_3H$/100 g of polymer. The sulfonic acid content can be determined by either titration of the polymeric sulfonic acid or Dietert Sulfur analysis. In the titration of the sulfonic acid the polymer is dissolved in solvent consisting of 95 parts by volume of toluene and 5 parts by volume of methanol at a concentration level of 50 grams per liter of solvent. The acid form is titrated with ethanolic sodium hydroxide to an Alizarin Thymolphthalein endpoint.

The acid form of the sulfonated polymer is gel-free and hydrolytically stable. Percent gel is measured by stirring the sulfonated polymer in a solvent comprising 95 vol.% toluene/5 vol.% methanol at a concentration of 5 wt.%, for 24 hours, allowing the mixture to settle, withdrawing a weighed sample of the supernatant solution and evaporating to dryness.

Hydrolytically stable means that the acid function, in this case the sulfonic acid, will not be eliminated under hydrolytic conditions to a neutral moiety which is incapable of being converted to a highly ionic functionality.

As described in U.S. Patent 3,642,728, the free polymeric sulfonic acid suffers from thermal instability. In addition the physical properties of the free polymeric acid are not very good. Although the polymeric sulfonic acid has improved properties over the unsulfonated elastomer as a result of relatively weak interactions between the sulfonic acid groups these properties are generally unsatisfactory and insufficient for most applications. Strong ionic interactions leading to thermal stability and markedly improved physical properties are achieved only through neutralization of the sulfonic acid to form the corresponding metal or ammonium salt. The free acid has poor physical properties because of the weak sulfonic acid interactions but as a consequence possesses low melt viscosity and thereby good processability. The high ionic interactions in the salt have the inverse effect, i.e. good physical properties on the one hand and high melt viscosity and poor processability on the other.

The neutralizing agents of the present invention are basic salts of carboxylic acids, wherein the cation of the basic salt is ammonium, aluminum, lead, iron, antimony, a metal of Groups IA, IIA, IB or IIB of the Periodic Table of Elements or a mixture thereof. Suitable monovalent metal ions are Na, K, Li, Cs, Ag, Hg, and Cu. Suitable divalent metal ions are Be, Mg, Ca, Sr, Ba, Cu, Cd, Hg, Sn, Fe, Pb, Co, Ni and Zn. Most preferred are zinc, magnesium, barium, sodium and lead. In preparing the ionomer the neutralizing agent is added at levels at least about 100% of stoichiometry and preferably in excess of stoichiometry.

The carboxylate ion of the metallic salt is derived from the following carboxylic acids as illustrated in the present invention; however, other carboxylic acids of the same generic class can be readily employed. These carboxylic acids are: acetic, benzoic, lauric, palmitic, myristic, decanoic, octanoic, and stearic. Thus suitable netralizing agents include stearates of lithium, sodium, barium, zinc, magnesium, lead or calcium.

When neutralization is effected with a metal carboxylate a product of the neutralization is the corresponding carboxylic acid.

$$—SO_3H+R—COOM \rightarrow —SO_3M+RCOOH$$

Although the degree of efficacy varies with structure and composition, carboxylic acids are in fact ionic plasticizers, i.e. they relax ionic associations thereby decreasing apparent molecular weight, lowering melt viscosity, and improving melt processability. Low molecular weight carboxylic acids, such as acetic acid, are not very effective ionic plasticizers at low concentration and are volatile so that they are substantially lost during compounding, extrusion, and other processing steps. Thus when neutralization of the sulfonic acid is effected with a lower molecular weight metal carboxylate the resultant metal sulfonate is unplasticised resulting in a very strong ionic association, high apparent molecular weight, high melt viscosity, and poor melt processability. This result is no different than if the sulfonated polymer were neutralized in solution immediately after sulfonation. An advantage of this invention is that formulations can be fully and homogeneously mixed prior to neutralization of the polymeric sulfonic acid thereby permitting the preparation of formulations that could not have been prepared otherwise.

The higher molecular weight carboxylic acids are not volatiles and remain with the neutralized gum. Because of their constitution the higher molecular weight carboxylic acids, such as lauric, palmitic, myristic, stearic, arachidic, and behenic, are excellent flow improvers, i.e. at processing temperatures viscosities are significantly reduced and flow stability is markedly improved. Thus when neutralization of the sulfonic acid is effected with a high molecular weight metal carboxylate it is accompanied by the generation of a non-volatile ionic domain plasticizer. Thus the melt viscosity of the formulation is improved through plasticizer generation. The carboxylic acid, however, has a deleterious effect upon physical properties, especially at elevated temperatures, for example 70°C.

Polyvalent cations, the most important of which are the divalent cations, such as zinc, magnesium and barium must be used in some excess of stoichiometry because it is not possible for all sulfonic acids to be neutralized with simply an equivalent amount of divalent cation. Consequently not only are disulfonate linkages, $—SO_3—M—O_3S—$, formed but also monosulfonate linkages, $—SO_3—M—OOC—R$. The relative amounts of these moieties and the type of carboxylate substituent exert a substantial effect upon both melt processability and physical properties.

Some of the higher molecular weight metal carboxylates can themselves act as effective ionic domain plasticizers for the neutralized systems when present in sufficient quantity, for example 10 parts to 30 parts per 100 of unplasticized neutralized gum. This is especially true of zinc carboxylate, such as zinc stearate, which not only functions to improve melt flow but imparts remarkable improvements on tensile properties at room temperature and at elevated temperatures. Most metal carboxylates possess little effect upon the ambient temperature tensile properties of neutralized gums and a significantly poorer effect upon melt processability than zinc stearate. As a consequence a high degree of ionic association occurs at higher temperatures.

As a consequence of the effects of higher molecular weight carboxylic acids and metal carboxylates it is possible to modulate both the melt viscosity and the physical properties of the neutralized gum not only through changes in concentration of the metal carboxylate but also through the use of mixtures of different metal carboxylates. It is further possible to modulate flow and physical properties by the conversion of the generated carboxylic acids to the corresponding metal carboxylates by reaction with the corresponding metal oxides and hydroxides.

$$—COOH+MO \text{ OR } (MOH) \rightarrow —COOM+H_2O$$

Such a conversion of carboxylic acids to metal carboxylates has been described in U.S. Patent 4,014,831. The metallic hydroxides are selected from Groups IA and IIA of the Periodic Table of Elements and mixtures thereof. Useful examples of metal hydroxides are NaOH, KOH, LiOH, $Mg(OH)_2$ and $Ba(OH)_2$. The metallic oxides are selected from the group consisting essentially of Groups IIA, IIB or lead and mixtures thereof of the Periodic Table of Elements. Illustrative examples are MgO, CaO, BaO, ZnO, $PbO_2$, or $Pb_3O_4$ and mixtures thereof. Especially preferred are the oxides of zinc and lead.

Neutralization of the polymeric sulfonic acid can be effected with metallic oxides alone, wherein the ion is a metal ion of Groups IIA or IIB of the Periodic Table of Elements or lead or a mixture thereof. Illustrative examples are MgO, CaO, BaO, ZnO, $PbO_2$ or $Pb_3O_4$ and mixtures thereof.

Other neutralizing agents which can be used alone are basic salts of hydroxides, alkoxides, or alkanoates, wherein the cation is a metal ion of Group IA or IIA of the Periodic Table of Elements or a mixture thereof. Useful examples of metal hydroxides are NaOH, KOH, LiOH, $Mg(OH)_2$ and $Ba(OH)_2$.

The improved process of the present invention comprises the steps of isolation of the acid form of the sulfonated elastomeric polymer having less than 15% retained water. The acid form is mixed at a temperature of less than about 66°C with appropriate amounts of fillers, extender oils and other additives until a homogeneous mixture has been achieved. A neutralizing agent is added to the homogeneous mixture at a level at least 100% of stoichiometry and mixing is continued until homogenity is achieved and at least partial neutralization of the acid form has been realized. Complete neutralization of the acid form can be realized in finishing operations such as extrusion and pelletization and in fabrication operations such as injection molding, extrusion, or compression molding.

The ionic associations of acid form of the sulfonated elastomeric polymer are minimal as compared to a neutralized sulfonated elastomeric polymer which cannot be easily processed due to its high ionic association. When the fillers and oils are mixed with the sulfonated elastomeric polymer before neutralization, improved dispersion is realized due to the mobility of the elastomeric polymer molecules and its minimal ionic associations. This improved dispersion results in a sulfonated elastomeric product having improved physical and rheological properties. The fillers and oils are mixed into the acid form at temperatures below 66°C in order to avoid decomposition of the acid form during processing. After sulfonation, isolation, and drying of the polymeric free sulfonic acid said product is converted to an ionomer by reaction with at least about 100% of the stoichiometric proportion of a metallic or nitrogen base, based on the sulfonic acid content of said sulfonated polymer.

Fillers which are used in the present invention are mineral fillers and carbon blacks. The mineral fillers employed are selected from talcs, ground calcium carbonate, water precipitated calcium carbonate, or delaminated, calcined or hydrated clays, silica and mixtures thereof. Typically, these mineral fillers have a particle size of about 0.03 to about 20 $\mu$m, more preferably about 0.3 to about 10, and most preferably about 0.5 to about 10. The oil absorption as measured by grams of oil absorbed by 100 grams of filler is about 10 to about 100, more preferably about 10 to about 85 and most preferably about 10 to about 75. One class of suitable fillers are those having a pH of less than about 8. Typical mineral fillers employed in this invention are illustrated in Table I.

Carbon blacks range widely in physical and chemical properties. Physically they vary in average particle size, particle size distribution, specific surface area, porosity of surface, and the tendency of the individual primary particles to be associated in chain-like structure. Chemically they vary in the population and nature of oxygenated structures combined with their surface. Typical carbon blacks employed by this invention are illustrated in Table II.

These mineral and carbon black fillers are blended into the blend composition at about 5 to about 300 parts per hundred; more preferably at about 20 to about 250; and most preferably at about 25 to about 200.

Table I

| Filler | Code No. | Oil Absorption grams of oil/100 grams of filler | Specific Gravity | Avg. Particle Size $\mu m$ | pH |
|---|---|---|---|---|---|
| Calcium carbonate ground | Atomite | 15 | 2.71 | | 9.3 |
| Calcium carbonate precipitated | Purecal U | 35 | 2.65 | .03—.04 | 9.3 |
| Delaminated clay | Polyfil XB | 30 | 2.61 | 4.5 | 6.5—7.5 |
| Hydrated clay | Suprex | | 2.6 | 2 | 4.0 |
| Calcined clay | Icecap K | 50—55 | 2.63 | 1 | 5.0—6.0 |
| Magnesium silicate (talc) | Mistron* Vapor | 60—70 | 2.75 | 2 | 9.0—7.5 |

*registered Trade Mark, at least in the United Kingdom

Table II

| Carbon Black | Type | Nigrometer Index | Sp. Surface Area, $m^2/g$ | EM Diameter $(d_n)$, A°+ | Volume, % | pH | Total Acids, meq./g |
|---|---|---|---|---|---|---|---|
| Black Pearls 46 | Channel | 65 | 800 | 130 | 14.0 | 3.0 | 2.42 |
| Black Pearls 74 | Channel | 74 | 332 | 170 | 5.0 | 5.0 | 0.95 |
| Spheron* 9 | Channel | 85 | 105 | 290 | 5.0 | 5.0 | 0.94 |
| Vulcan* 9 | Oil Furnace (SAF) | 86 | 124 | 200 | 1.5 | 8.5 | 0.84 |
| Vulcan* 3 | Oil Furnace (HAF) | 90 | 74 | 290 | 1.0 | 8.5 | 0.68 |
| Regal* 330 | Low Structure Oil Furnace | 84.5 | — | 240 | — | 8.5 | 0.42 |
| Sterling* S | Gas Furnace | 99 | 23 | 800 | 1.0 | 9.5 | 0.18 |
| Sterling* FT | Thermal (FT) | 107 | 13 | 1800 | 0.5 | 8.5 | 0.12 |
| Sterling* MT | Thermal (MT) | 110 | 6 | 4700 | 0.5 | 8.5 | 0.10 |

*registered Trade Marks, at least in the United Kingdom
+1A° $=10^{-10}$m

The oils employed in the present invention are non-polar process oils having less than about 6 wt.% polar type compounds as measured by molecular type clay gel analysis. These oils are selected from paraffinics ASTM Type 104B as defined in ASTM-D-2226-70, aromatics ASTM Type 102 of naphthenics ASTM Type 104A, wherein the oil has a flash point by the Cleveland open cup of at least 177°C, a pour point of less than 44°C, a viscosity of about 70 to about 3000 ssu (13 to 650 cSt.) at 38°C and a number average molecular weight of about 300 to about 1,000, and more preferably about 300 to 750. The preferred process oils are paraffinics. Table III illustrates typical oils encompassed by the scope of this invention.

The oils are incorporated into the composition at a concentration level of about 20 to about 200 parts per hundred; more preferably at about 20 to about 175, and most preferably at about 25 to about 150.

Table III

| Type Oil | Oil Code No. | Viscosity ssu (cSt)+ | Mn | % Polars | % Aromatic | % Saturates |
|---|---|---|---|---|---|---|
| Paraffinic | Sunpar 115 | 155 (33) | 400 | 0.3 | 12.7 | 87.0 |
| Paraffinic | Sunpar 180 | 750 (162) | 570 | 0.7 | 17.0 | 82.3 |
| Paraffinic | Sunpar 2280 | 2907 (627) | 720 | 1.5 | 22.0 | 76.5 |
| Aromatic | Flexon* 340 | 120 (25) | — | 1.3 | 70.3 | 28.4 |
| Naphthenic | Flexon* 765 | 505 (108) | — | 0.9 | 20.8 | 78.3 |
| Aromatic | Sundex 790 | 3000 (650) | — | 5.4 | 59.3 | 35.3 |
| Naphthenic | Sunthene 4240 | 2206 (476) | — | 1.1 | 43.9 | 55.0 |

*registered Trade Mark, at least in the United Kingdom
+1 St=1 $cm^2/s$

Various other additives can be incorporated into the blend compositions to improve the physical properties, the appearance, the chemical properties of the formed elastomeric article or to modify the processability of the blend compositions.

A crystalline polyolefinic thermoplastic can be incorporated into the blend composition in minor proportions as a means for modification of the rheological properties of the blend compositions as well as the stiffness of the elastomeric article. Typically, the crystalline polyolefinic thermoplastic is added to the blend composition at a concentration level of about 0 to about 100 parts per hundred by weight based on 100 parts of sulfonated polymer, more preferably at about 0 to about 75; and most preferably at about 0 to about 50.

A lubricant can be employed in the blend composition at a concentration level of less than about 20 parts per hundred based on 100 parts of the neutralized sulfonated elastomeric polymers, and more preferably less than about 15. The lubricants used in the present invention are non-polar paraffinic hydrocarbon waxes having a softening point of about 52°C to about 104°C, more preferably 66°C to 93°C, wherein the wax has a number average molecular weight of about 300 to about 4000, more preferably 300 to 3000 and less than about 2 wt% polar constituents. These lubricants modify the rheological properties of the composition, improve the processability in forming the elastomeric article and impart a shine or gloss to the elastomeric article. Additionally, amorphous polypropylene can be used as a lubricant.

Additionally, blends of sulfonated polymer, filler and oil, can be reinforced by adding calcium silicate. These reinforcing agents are generally characterized as having particle sizes below 0.1 μm and oil absorption above about 100. These reinforcing fillers may be incorporated in the blend of polymer, filler and oil in a concentration of up to 50 parts per hundred based on 100 parts of sulfonated polymer, preferably up to 25.

The ingredients incorporated into the blend compositions of the present invention, in conjunction with the type of elastomeric polymer, the degree of sulfonation, and the metal counterion of the neutralized sulfonated elastomeric polymer give materials processable by extrusion or injection molding processes into elastomeric articles having the desirable physical and rheological properties. These combined physical properties and rheological processability characteristics were not previously obtainable in the aforementioned U.S. patents.

Conversion of the uncompounded or compounded polymeric sulfonic acid by means of a metallic base or carboxylate occurs readily even at room temperature although higher temperatures, for example 75°C to 200°C, most preferably 100°C to 150°C and high shear mixing may be required to get complete neutralization. Sufficient mixing and heat are normally obtained under conventional mixing conditions with equipment such as rubber mills, Banbury mixers, and extruders. The resultant neutralized compounds have excellent processability for extrusion, injection molding, vacuum forming, compression molding and similar operations.

A means of characterizing the apparent molecular weight of a polymer involves the use of melt

rheological measurements. For ionic polymers, this is the preferred method since solution techniques are difficult to interpret due to the complex nature of the ionic associations. Melt rheological measurements of apparent viscosity at a controlled temperature and shear rate can be used as a measure of apparent molecular weight of an ionic polymer. Although the exact relationship between melt viscosity and apparent molecular weight for these ionic systems is not known, for the purposes of this application the relationship will be assumed to be one of direct proportionality. Thus, in comparing two materials, the one with the higher melt viscosity will be associated with the higher apparent molecular weight.

The melt viscosity of the systems investigated were determined by the use of an Instron Capillary Rheometer. Generally, the melt viscosity measurements were made at a temperature of 200°C and at various shear rates corresponding to crosshead speeds from 0.127 mm/min to 508 mm/min. The apparent viscosity at 200°C and at a shear rate of .73 $sec^{-1}$ (0.127 mm/min) will be employed as a characterization parameter in this application. A measure of the melt elasticity of a given system can also be obtained from these rheological measurements. A type of flow instability known as melt fracture is exhibited by many polymeric materials of high molecular weight. This phenomenon is shear sensitive and thus will generally exhibit itself at a given shear rate and temperature. The shear rate for the onset of melt fracture indicates the upper shear rate for processing a given material.

The advantages of the improved process of manufacturing these new compositions of sulfonated elastomeric products may be more readily appreciated by reference to the following examples, in which, however, Examples 1 to 3 do not illustrate the invention.

Example 1

A commercial EPDM rubber Vistalon 2504, which is a terpolymer of ethylene, propylene and 5-ethylidene-2-norbornene having an $\overline{M}n$ of about 46,700, and $\overline{M}v$ of about 145,000 and a Mooney viscosity (ML, 1+8, 100°C) of about 40, was sulfonated according to the following procedure. 500 grams of Vistalon 2504 was dissolved in 5.0 litres of hexane and 28.7 ml of acetic anhydride to form a cement. Concentrated sulfuric acid (10.52 ml) was dripped slowly into the cement, and the cement was stirred for 30 minutes at room temperature. The reaction was quenched after thirty minutes with 200 ml of isopropanol containing 2.5 grams of Antioxidant 2246 [2,2′-methylene-bis-(4-methyl-6-tert butylphenol)]. The cement was steam stripped then to isolate the acid form of the sulfonated elastomeric polymer, and the acid form was then washed with water in a Waring blender. The resultant crumb was dewatered to less than 10 wt.% water on a two-roll rubber mill at about 110°F. It contained 0.98 wt.% sulfur.

Samples of the acid form of the sulfonated EPDM polymer were placed in vacuum ovens at 80°C and 100°C and analyzed after 24 and 72 hours with the results shown in Table IV.

Table IV

| At 80°C | Sulfur Content, wt.% Based on Sulfonated EPDM Rubber |
|---|---|
| 24 hours | 1.00 |
| 72 hours | 0.92 |
| At 100°C | |
| 24 hours | 0.78 |
| 72 hours | 0.64 |

This example shows that the acid form of a sulfonated EPDM polymer is thermally labile and that care must be exercised in its handling. However, these results show that little degradation occurs at about 80°C. Consequently little degradation, and therefore no deleterious effects, are encountered when the polymeric sulfonic acid is processed for relatively short periods of time at below about 66°C.

Example 2

To a solution of 200 grams of Vistalon 2504 in 4 liters of chlorobenzene was added 50 ml. of 1.0 molar acetyl sulfate in chlorobenzene. The acetyl sulfate was prepared by mixing 4.0 moles of acetic anhydride with 1.0 mole of concentrated sulfuric acid at below 10°C in 566 ml of chlorobenzene. The cement was stirred for thirty minutes and the reaction was quenched with 100 ml. of methanol containing 1.0 gram of Antioxidant 2246. The reaction mixture was steam stripped, the product pulverized with water in a Waring blender, and the resultant wet crumb dewatered on a rubber mill at about 43°C to form the acid form of the sulfonated EPDM polymer which contained 20.6 meq. of $SO_3H$ groups per 100 grams of the sulfonated EPDM polymer as measured by acid titration.

Samples of the acid form of the sulfonated EPDM terpolymer were mixed on a cold rubber mill at a temperature of less than about 66°C for a period of time sufficient to form a homogeneous mixture

with sodium stearate, zinc stearate, magnesium stearate, calcium stearate, and barium stearate, wherein 11 parts of the metal stearate was used per 100 parts of the sulfonated terpolymer. The formulated gums were compression molded for various times at various temperatures. Excellent flawless micropads were obtained in all cases which exhibited excellent tensile properties as shown in Table V. The control in this Table is the acid form of the sulfonated EPDM polymer.

Table V

| Metal Stearate | Mold Min/°C | 300% Modulus, psi* | Tensile Strength psi* | Elongation, % | Tensile Set, % | Volume Swell, % |
|---|---|---|---|---|---|---|
| Control | 60/177 | 70 | 210 | 990 | 77 | — |
| Sodium Stearate | 15/141 | 400 | 1540 | 590 | — | — |
| | 60/177 | 440 | 2770 | 620 | 12.5 | 510 |
| | 5/204 | 450 | 2640 | 645 | — | — |
| Zinc Stearate | 60/177 | 310 | 1590 | 660 | 18.7 | 690 |
| Magnesium Stearate | 60/177 | 500 | 3200 | 700 | 18.7 | 330 |
| Calcium Stearate | 60/177 | 450 | 2260 | 635 | 12.5 | 470 |
| Barium Stearate | 15/141 | 490 | 1310 | 500 | — | — |
| | 60/177 | 460 | 1720 | 560 | — | — |
| | 5/204 | 480 | 1880 | 610 | — | — |

*The equivalent figures in $kg/cm^2$ can be obtained by multiplying by 0.07.

This example clearly demonstrates that the acid form of the sulfonated EPDM polymer can be readily isolated and dewatered. Flawless articles can be prepared through the mixing of the acid form of the sulfonated EPDM polymer on the cold two roll rubber mill with a metallic salt of a carboxylic acid at least to partially neutralize the acid form and subsequently compression molding the product at an elevated temperature thereby causing complete neutralization of the acid form. The particular metallic ion used to neutralize the acid form has a dramatic effect on the tensile properties of the neutralized, ionically cross-linked sulfonated EPDM elastomeric product.

Example 3

To a solution of 400 grams of Vistalon 2504 dissolved in 8000 ml. of chlorobenzene was dripped in 160 ml. of a 1 Molar acetyl sulfate solution prepared according to the process of Example 2. After 30 minutes stirring of the cement at room temperature, the reaction was terminated by the addition of 160 ml. of methanol containing 1.6 grams of Antioxidant 2246. The reaction mixture was steam stripped, the product was pulverized twice in methanol containing Antioxidant 2246 in a Waring blender; the resultant crumb of the acid form of the sulfonated EPDM rubber was dewatered on a two-roll rubber mill until the material was lacy and then the material was washed twice again with stabilized methanol. The crumb was dewatered again and banded on a warm rubber mill at about 60°C. Sulfur analysis showed the acid form of the sulfonated EPDM polymer to contain about 26.6 meq. $SO_3H$ groups per 100 grams of polymer.

A sample of the sulfonated EPDM was mixed on a cold two-roll rubber mill with 16 phr of magnesium stearate. The formulation was then heated at 163°C for 45 minutes.

Another sample of the acid form of the sulfonated EPDM polymer (40 grams) was dissolved in 760 ml. of toluene and 40 ml. methanol. To the solution was added 23.3 ml. of 1N magnesium acetate in 50 ml. water/50 ml. methanol. The neutralized product was steam stripped, washed twice with stabilized methanol in a Waring blender, and dried in a vacuum oven.

A compression molded sample of the bulk neutralized magnesium stearate was smooth and shiny. The solution neutralized sample of magnesium acetate could not be compression molded to a smooth, strain free pad.

The rheologies of these two neutralized samples were measured on an Instron Capillary Rheometer using a 0.05"×1.0" (1.27 mm×25.4 mm) die at 200°C. The shear rate-shear stress and viscosity data of these two samples are summarized in Table VI. A compression molded slab at 163°C for 45 minutes was prepared from the magnesium stearate sample for testing. The dried crumb of the magnesium acetate sample was used. The magnesium acetate sample gave rough strands below 15 $sec^{-1}$ and at higher shear rates the strands disintegrated into crumb. This behavior is indicative of a cross-linked elastomer. The magnesium stearate sample showed a dramatic change in the flow and melt structure. Substantially lower viscosities and a delay in melt fracture was obtained with the magnesium stearate sample which indicates an improvement in processability.

Table VI

| Shear Rate | 0.74 $sec^{-1}$ | 7.4 $sec^{-1}$ | 74 $sec^{-1}$ | Comments |
|---|---|---|---|---|
| Mg Acetate, Solution Neutralized | | | | |
| Shear Stress, Dynes*/$cm^2 \times 10^{-5}$ | 50.0 | 67.0 | 75.7 | Strand does not hold at 15 $sec^{-1}$. Severe crumbling at 74 $sec^{-1}$ |
| Viscosity, poise$^{+} \times 10^{-5}$ | 67 | 9.0 | 1.0 | |
| Mg Stearate, Bulk Neutralized | | | | |
| Shear Stress, Dynes*/$cm^2 \times 10^{-5}$ | 20.1 | 42.6 | 68.6 | Melt fracture at 30 $sec^{-1}$. Maintains strand integrity beyond 300 $sec^{-1}$. |
| Viscosity, poise$^{+} \times 10^{-5}$ | 27 | 5.7 | 0.92 | |

*1 Dyne=$10^{-5}$N
$^{+}$1 Poise=0.1 Pa · S

Example 4

A sulfonated EPDM polymer of Vistalon 2504 was prepared according to the procedure of Examples 2 and 3. The sulfonated EPDM polymer contained 17.8 meq. of $SO_3H$ groups per 100 grams of polymer.

Sample A was prepared by mixing 100 grams of polymer with 11 grams of magnesium stearate on a cold two-roll mill.

Sample B was prepared by mixing 100 grams of polymer with 11 grams of barium stearate on a cold two-roll mill.

Samples C and D were prepared by mixing 100 grams of polymer with 50 grams of HAF carbon black on a cold two-roll mill. After a homogeneous mixture had been obtained, for each sample, 11 grams of either magnesium stearate or barium stearate was added to make respectively Samples C and D. The mixing was continued on the mill to give at least partially neutralized samples of the sulfonated EPDM polymer.

Samples E and F were prepared by mixing 100 grams of the polymer with 75 grams of carbon black SRF, 75 grams of carbon black FEF, and 100 grams of Flexon 845 oil on a cold two-roll mill. After a homogeneous mixture had been obtained for each, 11 grams of either magnesium stearate or barium stearate was added to make respectively Samples E and F. The mixing was continued on the mill to give at least partially neutralized samples of the sulfonated EPDM polymer. The six samples (A—F) were compression molded at 163°C for 45 minutes. The resultant samples were smooth and shiny. The tensile properties of these neutralized samples are summarized in Table VII and the rheological properties of the six samples are summarized in Table VIII. Excellent physical and rheological properties are obtained even with highly filled systems.

Table VII

| Sample | Formulation | Metal Stearate | At Room Temperature 300 Modulus, psi* | Tensile Strength, psi* | Elong., % | At 100°C 300 Modulus, psi* | Tensile Strength, psi* | Elong., % |
|---|---|---|---|---|---|---|---|---|
| A | Gum | Magnesium | 370 | 3010 | 600 | 140 | 270 | 745 |
| B | Gum | Barium | 410 | 2340 | 610 | 120 | 160 | 630 |
| C | Black | Magnesium | 1450 | 2600 | 560 | 500 | 600 | 445 |
| D | Black | Barium | 1460 | 2380 | 510 | 475 | 550 | 390 |
| E | Oil-Black | Magnesium | 355 | 340 | 290 | — | 100 | 140 |
| F | Oil-Black | Barium | 610 | 720 | 420 | — | 210 | 270 |

*The equivalent figures in kg/cm² can be obtained by multiplying by 0.07.

Table VIII

| Sample | Metal Ion | Shear Rate, $Sec^{-1}$ | Shear Stress Dynes*/cm²x$10^{-5}$ | Viscosity, Poise⁺ | Shear Rate At Fracture |
|---|---|---|---|---|---|
| A | Mg | 0.74 | 17.7 | $2.4\times10^6$ | 7.4 $sec^{-1}$ |
| | | 7.4 | 43.0 | $5.8\times10^5$ | |
| | | 74 | 62.3 | $8.4\times10^4$ | |
| B | Ba | 0.74 | 32.8 | $4.4\times10^6$ | 0.74 $sec^{-1}$ |
| | | 7.4 | 54.2 | $7.3\times10^5$ | |
| | | 74 | 73.3 | $9.9\times10^4$ | |
| C | Mg | 0.74 | 26.2 | $3.5\times10^6$ | 74 $sec^{-1}$ |
| | | 7.4 | 50.5 | $6.8\times10^5$ | |
| | | 74 | 70.2 | $9.4\times10^4$ | |
| D | Ba | 0.74 | 35.1 | $4.7\times10^6$ | 30 $sec^{-1}$ |
| | | 7.4 | 59.4 | $8.0\times10^5$ | |
| | | 74 | — | — | |
| E | Mg | 0.74 | 6.0 | $8.1\times10^5$ | 740 $sec^{-1}$ |
| | | 7.4 | 10.9 | $1.5\times10^5$ | |
| | | 74 | 20.5 | $2.8\times10^4$ | |
| | | 740 | 40.2 | $5.4\times10^3$ | |
| F | Ba | 0.74 | 6.9 | $9.2\times10^5$ | 149 $sec^{-1}$ |
| | | 7.4 | 14.1 | $1.9\times10^5$ | |
| | | 74 | 25.1 | $3.4\times10^4$ | |
| | | 740 | 50.1 | $6.7\times10^3$ | |

*1 Dyne=$10^{-5}$N
⁺1 Poise=0.1 PaS

Example 5

Two hundred grams of a higher molecular weight EPDM elastomer (Vistalon 3708) having a Mooney viscosity (ML, 1+8, 127°C) of about 45—55, an $\bar{M}n$ of about 52,300, and an $\bar{M}v$ of about 270,000, was dissolved in 5000 ml of hot chlorobenzene, and the temperature was maintained at 50°C. To the resultant cement was added 50 ml of 0.996 M acetyl sulfate in chlorobenzene and the reaction was maintained at 50°C for 30 minutes. The reaction was quenched with 100 ml of stabilized methanol. The sulfonated EPDM was steam stripped, washed twice with methanol in a Waring blender, and dewatered at 43°C on a two roll rubber mill until the crumb formed a lace. The lace was washed twice again with stabilized methanol, dewatered again, dried and stabilized with 1.0 grams of Antioxidant 2246 on the two roll mill at 43°C. The resultant acid form of the sulfonated EPDM elastomeric polymer had 21.3 meq. $SO_3H$ groups per 100 grams of polymer.

The following formulations were mixed on a cold two roll rubber mill, wherein the magnesium stearate was added after a homogeneous mixture of the acid form of the sulfonated EPDM, oil and black had been achieved.

| | | |
|---|---|---|
| 1) | Sulfonated EPDM | 100 grams |
| | Magnesium Stearate | 16 grams |
| 2) | Sulfonated EPDM | 100 grams |
| | FEF Black | 50 grams |
| | Magnesium Stearate | 16 grams |
| 3) | Sulfonated EPDM | 100 grams |
| | FEF Black | 75 grams |
| | SRF Black | 75 grams |
| | Flexon 845 Oil | 100 grams |
| | Magnesium Stearate | 16 grams |

Test samples were prepared by compression molding at 163°C for 45 minutes. The tensile properties of these samples are summarized in Table IX and the rheological properties are shown in Table X. The neutralized magnesium gums possess an exceptionally high viscosity. Mixing of such high viscosity gums with extender oils and fillers is extremely difficult and dispersion is poor due to the limited wettability of the filler by the polymeric matrix during mixing. Therefore, it is possible to produce a final formulation of superior physical and rheological properties which would have been impossible, if the oil and filler had been mixed directly into the neutralized sulfonated EPDM instead of premixing the fillers and oils into the acid form of the sulfonated EPDM and then neutralizing. The neutralized gums are so intractible that mixing fillers and extenders therein is not possible or practical.

Table IX

| Polymer | Example 5 | | | Example 6 | | |
|---|---|---|---|---|---|---|
| Formulation | 1 | 2 | 3 | 1 | 2 | 3 |
| Room Temperature | | | | | | |
| 300% Modulus, psi* | 750 | 1940 | 840 | — | — | — |
| Tensile Strength, psi* | 3785 | 2840 | 1050 | — | — | — |
| Elongation, % | 570 | 430 | 430 | — | — | — |
| Tensile Set, % | 56 | 50 | 31 | — | — | — |
| 100°C | | | | | | |
| 300% Modulus, psi* | — | — | — | — | — | — |
| Tensile Strength, psi* | 200 | 580 | 200 | 430 | 910 | 450 |
| Elongation, % | 420 | 300 | 270 | 150 | 190 | 280 |
| Tensile Set, % | 42 | 12.4 | 18.6 | 6.2 | 6.2 | 12.4 |

*The equivalent figures in $kg/cm^2$ can be obtained by multiplying by 0.07

Table X

| Example | Formulation | Shear Rate $sec^{-1}$ | Shear Stress Dynes*/$cm^2 \times 10^5$ | Viscosity, Poise+ |
|---|---|---|---|---|
| 5 | 1 | 0.74 | 32.3 | $4.4\times10^6$ |
| | | 7.4 | 54.9 | $7.5\times10^5$ |
| | | 74 | 69.7 | $9.5\times10^4$ |
| 5 | 3 | 0.74 | 9.0 | $1.2\times10^6$ |
| | | 7.4 | 15.3 | $2.1\times10^5$ |
| | | 74 | 24.5 | $3.3\times10^4$ |
| | | 740 | 43.2 | $5.9\times10^3$ |
| 6 | 1 | 0.74 | 47.1 | $6.4\times10^6$ |
| | | 7.4 | 66.6 | $9.0\times10^5$ |
| | | 74 | 76.0 | $1.0\times10^5$ |
| 6 | 3 | 0.74 | 14.5 | $2.0\times10^6$ |
| | | 7.4 | 21.0 | $2.9\times10^5$ |
| | | 74 | 30.9 | $4.2\times10^4$ |
| | | 740 | 54.9 | $7.5\times10^3$ |

*1 Dyne=$10^{-5}$N
+1 Poise=0.1 PaS

Example 6

A sulfonated EPDM of Vistalon V-3708 was made according to the procedure of Example 5, wherein the resultant acid form of the sulfonated EPDM had 29.2 meq. $SO_3H$ groups per 100 grams of polymer. This polymer was mixed according to the formulations of Example 5 and test samples were prepared by compression molding at 163°C for 45 minutes. The tensile data are again given in Table IX, and the rheological properties are summarized in Table X. The increased sulfonation of the EPDM should decrease the rheological properties; however, superior materials can be still produced by first mixing the fillers and extender oils into the polymeric acid and then bulk neutralizing the homogeneous mixture with metal salt of a carboxylic acid.

Example 7

Two hundred grams of Vistalon 2504 was dissolved in 4000 ml of hexane. To the resultant cement was added 11.47 ml. of acetic anhydride, and then 4.2 ml of concentrated sulfuric acid was dripped in at room temperature. The reaction was stirred for thirty minutes at room temperature and the sulfonation was quenched with 100 ml of stabilized methanol. The acid form of the sulfonated EPDM was isolated by steam stripping, washed with water in a waring blender, dewatered, and dried on a two roll mill at 43°C. The following formulations were made from the acid form of the sulfonated EPDM, wherein the metal salt of the carboxylic acid was added after a homogeneous mixture of the acid form, filler and oil had been achieved.

| | | |
|---|---|---|
| 1) | Sulfonated EPDM | 100 grams |
| | Magnesium Stearate | 23.5 grams |
| 2) | Sulfonated EPDM | 100 grams |
| | Magnesium Acetate . $4H_2O$ | 8.5 grams |
| 3) | Sulfonated EPDM | 100 grams |
| | FEF Black | 75 grams |
| | SRF Black | 75 grams |
| | Flexon 845 Oil | 100 grams |
| | Magnesium Stearate | 23 grams |
| 4) | Sulfonated EPDM | 100 grams |
| | FEF Black | 75 grams |
| | SRF Black | 75 grams |
| | Flexon 845 Oil | 100 grams |
| | Magnesium Acetate · $4H_2O$ | 8.5 grams |

These formulations were compression molded at 163°C for 15 minutes. The physical properties are summarized in Table XI and the rheological properties are shown in Table XII. A fifth formulation was prepared according to the recipe of formulation 4, wherein the acid form was first neutralized with the magnesium acetate and then the filler and oil were added. The physical and rheological properties of formulation five are also summarized in Tables XI and XII. The formulations with magnesium stearate exhibited improved rheological properties as compared to those of magnesium acetate. In attempting to remold the test pads of formulation 2, it was not possible to make good, well-knitted pads. The

rheological properties of formulation 5 are inferior to formulation 4. Thus, better rheological properties are achieved by first forming a homogeneous mixture of the acid form, filler, and oil and then bulk neutralizing with the metal salt of the carboxylic acid.

Table XI

| Formulation | 1 | 2 | 3 | 4 | 5 |
|---|---|---|---|---|---|
| Room Temperature | | | | | |
| Tensile Strength, psi* | 3130 | 580 | 820 | 730 | 650 |
| Elongation, % | 600 | 270 | 370 | 290 | 260 |
| 100°C | | | | | |
| Tensile Strength, psi* | 240 | 240 | 190 | 240 | — |
| Elongation, % | 490 | 80 | 290 | 80 | — |

*The equivalent figures in $kg/cm^2$ can be obtained by multiplying by 0.07

Table XII

| Formulation | Shear Rate, $sec^{-1}$ | Shear Stress, Dynes*/$cm^2 \times 10^5$ | Viscosity, Poise+ | Shear Rate at Fracture, $sec^{-1}$ |
|---|---|---|---|---|
| 1 | 0.88 | 16.4 | — | 29 |
| | 8.8 | 38.9 | — | |
| | 88 | 65.5 | — | |
| | 294 | 80.4 | — | |
| 2 | 0.88 | 38.9 | — | 0.9 |
| | 8.8 | 56.6 | — | |
| | 88 | 71.8 | — | |
| | 294 | 84.3 | — | |
| 3 | 0.88 | 4.1 | — | 1469 |
| | 8.8 | 9.2 | — | |
| | 88 | 17.2 | — | |
| | 294 | 26.2 | — | |
| 4 | 0.88 | 7.5 | — | 88 |
| | 8.8 | 13.6 | — | |
| | 88 | 26.1 | — | |
| | 294 | 38.0 | — | |
| 5 | 0.88 | 13.4 | — | 9 |
| | 8.8 | 24.0 | — | |
| | 88 | 41.0 | — | |
| | 294 | 57.7 | — | |

*1 Dyne=$10^{-5}$N
+1 Poise=0.1 PaS

Example 8

A commercial EPDM, Vistalon 6505, was reduced in molecular weight through a controlled extrusion process. The final Mooney viscosity (ML, 1+8, 100°C) was about 20. Five hundred grams of this polymer was dissolved in 5000 ml of hexane. To the cement was added 405 mmoles of acetic anhydride followed by 250 mmoles of concentrated sulfuric acid. After stirring for 30 minutes at room temperature sulfonation was terminated through the addition of 750 ml methanol. Antioxidant 2246 (2.5 g) was added to the terminated cement, and the sulfonated polymer was isolated through steam stripping, washing with water in a Waring blender, and then dewatering the wet crumb on a rubber mill at about 43°C. The polymeric free acid contained 20.3 meq. free sulfonic acid/100 polymer according to sulfur analysis. The polymeric sulfonic acid was mixed according to the formulations in Table XIII. In every case the neutralizing agent was added last. Tensile test pads and samples for melt index measurement were molded 15 minutes at 350°F.

The room temperature tensile properties and the melt index at 190°C and 250 psi (17.6 $kg/cm^2$) are given in Table XIII.

This example demonstrates the use of a high unsaturation EPDM, three different carbon blacks,

three different oils, three different metal stearates, at filler loadings of up to 200 parts, and at oil loadings of up to 75 parts.

Table XIII

| | | | | |
|---|---|---|---|---|
| Sulfonated V-6505 | 100 | 100 | 100 | 100 |
| Thermex** (MT Black) | 200 | — | — | — |
| P-33 (FT Black) | — | — | 150 | — |
| Spheron 9 (EPC Black) | — | — | — | 100 |
| Sunpar 2280 | — | 50 | — | — |
| Sundex 790 | — | — | 50 | — |
| Sunthene 4240 | — | — | — | 75 |
| Zinc Stearate | 28.5 | 19 | — | — |
| Lead Stearate | — | — | 35 | — |
| Barium Stearate | — | — | — | 31.7 |
| Tensile Strength, psi+ | 560 | 50 | 300 | 220 |
| Elongation, % | 70 | 420 | 380 | 290 |
| Melt Index (190°C, 250 psi+), g/10 minutes | 5.9 | 1.6* | >50 | 0.8 |

*At 6.5 psi+

**Registered Trade Mark, at least in the United Kingdom

+The equivalent figures in $kg/cm^2$ can be obtained by multiplying by 0.07

Example 9

Five hundred grams of Butyl 365, which contains about 2.0 mole% unsaturation and has a Mooney viscosity (ML, 1+8, 100°C) of about 45, was dissolved in 5000 ml of hexane. To the cement was added 304 mmoles of acetic anhydride followed by 187.5 mmoles of concentrated sulfuric acid. After 30 minutes agitation at room temperature sulfonation was terminated with 200 ml methanol. Antioxidant 2246 (2.5 g) was added and the sulfonated polymer was isolated and dewatered as described in Example 8. The polymeric sulfonic acid contained 30.9 meq. of free sulfonic acid/100 polymer according to sulfur analysis. Mixtures of this polymeric sulfonic acid were made according to the formulations in Table XIV. In every case the neutralizing agent was added last. Tensile test pads and samples for melt index were molded 15 minutes at 177°C. The room temperature tensile properties and the melt index at 190°F and 250 psi (17.6 $kg/cm^2$) are given in Table XIV.

This example demonstrates the use of a Butyl rubber, three different carbon blacks, three mineral fillers, three different oils, four different metal stearates, and zinc oxide neutralizing agent.

Table XIV

| | | | | | | | |
|---|---|---|---|---|---|---|---|
| Sulfonated Butyl 365 | 100 | 100 | 100 | 100 | 100 | 100 | 100 |
| Spheron 9 (EPC Black) | 50 | — | — | — | — | — | — |
| Philblack** A (FEF Black) | — | 50 | — | — | — | — | — |
| Philblack** E (SAF Black) | — | — | 50 | — | — | — | — |
| Purecal U | — | — | — | — | 100 | — | — |
| Icecap K | — | — | — | — | — | 100 | — |
| Silene** D | — | — | — | — | — | — | 100 |
| Sunpar 2280 | — | — | — | — | 50 | — | — |
| Sundex 790 | — | — | — | — | — | 50 | 50 |
| Sunthene 4240 | 27.6 | — | — | — | — | — | — |
| Sodium Stearate | — | 27.3 | — | — | — | — | — |
| Calcium Stearate | — | — | 26.6 | — | — | 26.6 | — |
| Magnesium Stearate | — | — | — | 50 | 28.5 | — | — |
| Zinc Stearate | — | — | — | — | — | — | 6 |
| Zinc Oxide | — | — | — | — | — | — | — |
| Tensile Strength, psi.+ | 1420 | 1410 | 1705 | 1930 | 890 | 590 | 820 |
| Elongation, % | 710 | 670 | 520 | >1000 | 810 | 800 | 393 |
| Melt Index (190°C, 250 psi+), g/10 minutes | 10.7 | 1.9 | 0.1 | 0.2* | 0.1* | 10.9 | 0 |

*At 6.5 psi.+

**Registered Trade Mark at least in the United Kingdom

+The equivalent figures in $kg/cm^2$ can be obtained by multiplying by 0.07.

Example 10

One hundred grams of Butyl HT 1066, a chlorinated Butyl rubber, was dissolved in 1000 ml of hexane. To the cement was added 60.8 mmoles acetic anhydride followed by 37.5 mmoles of concentrated

sulfuric acid. After 30 minutes stirring at room temperature the sulfonation was terminated through the addition of 100 ml of methanol. Antioxidant 2246 (0.5 g) was added, and the cement was isolated and dewatered as described in Example 9. The polymeric sulfonic acid contained 10 meq. of sulfonic acid/100 polymer and was mixed according to the formulations in Table XVI. In every case the neutralizing agent was added last. Tensile test pads and samples for melt index were molded 15 minutes at 177°C. The room temperature tensile properties and the melt index at 190°C and 250 psi (17.6 kg/cm²) are given in Table XVI.

This example demonstrates the use of chlorinated Butyl rubber containing as little as 10 meq. of sulfonic acid per 100 of polymer.

Table XVI

| | | | | |
|---|---|---|---|---|
| Sulfonated Butyl HT 1066 | 100 | 100 | 100 | 100 |
| Philblack E (SAF Black) | — | — | 75 | — |
| Philblack O (HAT Black) | — | — | 75 | — |
| Dixie Clay | — | — | — | 100 |
| Sunpar 2280 | — | — | 100 | — |
| Zinc Stearate | 28.5 | 50 | — | 28.5 |
| Lithium Stearate | — | — | 26.1 | — |
| Tensile Strength, psi⁺ | 480 | 360 | 60 | 175 |
| Elongation, % | 800 | 750 | 130 | 800 |
| Melt Index (190°C, 250 psi⁺), g/10 minutes | 0.3 | 7.7 | 0 | 0.03* |

*At 6.5 psi⁺

⁺The equivalent figures in kg/cm² can be obtained by multiplying by 0.07

## Claims

1. A process for forming a composition comprising a neutralized sulphonated elastomeric product from an acid form of a sulphonated elastomeric olefinically unsaturated polymer having 5 to 60 meq. unneutralized sulphonate groups per 100 grams of sulphonated elastomeric polymer and a water content of less than 15 wt%, which comprises:

(a) mixing said sulphonated elastomeric polymer with at least one filler, the filler being carbon black, calcium carbonate, talc, silica, a clay or a mixture thereof to form a mixture:

(b) compounding said mixture at less than 150°F (66°C) into a homogeneous state; and

(c) adding either during or after steps (a) and (b) a neutralizing agent at a level of at least 100% stoichiometry and further compounding at less than 150°F (66°C) to neutralize at least partially said sulphonated elastomeric polymer in said homogeneous mixture thereby forming a metal or ammonium neutralized sulphonated elastomeric polymer.

2. A process according to claim 1, which includes subjecting the at least partially neutralised polymer to a finishing operation to effect complete neutralisation.

3. A process according to claim 2, wherein said further neutralization is effected by extrusion, injection or compression molding process.

4. A process according to any one of the preceding claims, wherein, said neutralizing agent is a basic salt of a carboxylic acid, the cation of said salt being aluminium, lead, iron, antimony, ammonium, a metal of Groups I-A, II-A, I-B or II-B of the Periodic Table of Elements (IUPAC 1965 revision) or a mixture thereof.

5. A process according to claim 4, wherein said cation is lithium, calcium, barium, sodium, zinc, magnesium or a mixture thereof.

6. A process according to any one of claims 1 to 4 wherein said neutralizing agent is a stearate of lithium, sodium, barium, zinc, magnesium, lead or calcium.

7. A process according to any one of claims 1 to 3, wherein said neutralizing agent is a metal oxide.

8. A process according to claim 7, wherein said metal oxide is zinc oxide, magnesium oxide, calcium oxide, barium oxide, lead peroxide or red lead ($Pb_3O_4$).

9. A process according to any one of the preceding claims wherein the filler is 5 to 300 parts by weight based on 100 parts of said neutralized sulphonated elastomeric polymer.

10. A process according to claim 9 wherein the concentration of said filler is 25 to 200 parts by weight based on 100 parts of said neutralized sulphonated elastomeric polymer.

11. A process according to any one of the preceding claims wherein the filler has a pH of less than about 8.

12. A process according to any one of claims 1 to 10 wherein the polymer and filler is also mixed with an extender oil.

13. A process according to any one of the preceding claims wherein the concentration of the

extender oil is 20 to 200 parts by weight based on 100 parts of said neutralized sulphonated elastomeric polymer.

14. A process according to claim 13, wherein the concentration of said extender oil is 25 to 150 parts by weight based on 100 parts of said neutralized sulphonated elastomeric polymer.

15. A process according to any one of the preceding claims wherein said oil is a naphthenic, aromatic, or paraffinic oil or a mixture thereof.

16. A process according to claim 15, wherein said oil is a paraffinic oil having an $\overline{M}n$ of 300 to 1000.

17. A process according to any one of claims 12 to 16 wherein the blend of polymer, filler and oil also includes calcium silicate.

18. A process according to any one of the preceding claims, wherein said neutralized sulphonated elastomeric polymer is a sulphonated derivative of butyl rubber, halo-butyl rubber or an EPDM terpolymer, said butyl rubber being the copolymer obtained by polymerising 70 to 99.5% by weight of a $C_4$ to $C_7$ isoolefin and 0.5 to 30% by weight of a $C_4$ to $C_{14}$ conjugated multiolefin and EPDM being a terpolymer containing ethylene and propylene derived units in the backbone and diene derived units in the side chain.

## Revendications

1. Procédé pour former une composition comprenant un produit élastomère sulfoné, neutralisé, à partir d'une forme acide d'un polymère élastomère sulfoné, à insaturation oléfinique, ayant de 5 à 60 méq. de groupes sulfonate non-neutralisés par 100 g de polymère élastomère sulfoné, et une teneur en eau inférieure à 15% en poids, caractérisé en ce qu'il comprend:

(a) le mélange de ce polymère élastomère sulfoné avec au moins une matière de charge, choisie parmi le noir de carbone, le carbonate de calcium, le talc, la silice, une argile ou un mélange de ces matières, pour former un mélange;

(b) le mélange de ces matières à une température inférieure à 66°C jusqu'à un état homogène; et

(c) l'addition pendant ou après les stades (a) et (b) d'un agent de neutralisation à un taux correspondant à une stoechiométrie d'au moins 100%, puis le mélange à sec à moins de 66°C pour neutraliser au moins partiellement ledit polymère élastomère sulfoné dans ledit mélange homogène, pour former un polymère élastomère sulfoné, neutralisé par un sel métallique ou d'ammonium.

2. Procédé selon la revendication 1, caractérisé en ce qu'il consiste en outre à soumettre le polymère au moins partiellement neutralisé à une opération de finition pour obtenir une neutralisation complète.

3. Pocédé selon la revendication 2, caractérisé en ce que la neutralisation finale est effectuée par un procédé d'extrusion, d'injection ou de moulage par compression.

4. Procédé selon l'une quelconque des revendications précédentes, caractérisé en ce que l'agent de neutralisation est un sel basique d'un acide carboxylique, le cation de ce sel étant l'aluminium, le plomb, le fer, l'antimoine, l'ammonium, un métal des groupes I-A, II-A, I-B ou II-B de la Classification Périodique des Eléments (IUPAC, révision 1965) ou un mélange de ceux-ci.

5. Procédé selon la revendication 4, caractérisé en ce que le cation est le lithium, le calcium, le baryum, le sodium, le zinc, le magnésium ou un de leurs mèlanges.

6. Procédé selon l'une quelconque des revendications 1 à 4, caractérisé en ce que l'agent de neutralisation est un stéarate de lithium, de sodium, de baryum, de zinc, de magnésium, de plomb ou de calcium.

7. Procédé selon l'une quelconque des revendications 1 à 3, caractérisé en ce que l'agent de neutralisation est un oxyde métallique.

8. Procédé selon la revendication 7, caractérisé en ce que l'oxyde métallique est l'oxyde de zinc l'oxyde de magnésium, l'oxyde de calcium, l'oxyde de baryum, le peroxyde de plomb ou du minium de plomb ($Pb_3O_4$).

9. Procédé selon l'une quelconque des revendications précédentes, caractérisé en ce que la matière de charge représente de 5 à 300 parties en poids pour 100 parties du polymère élastomère sulfoné, neutralisé.

10. Procédé selon la revendication 9, caractérisé en ce que la concentration de la matière de charge est de 25 à 200 parties en poids pour 100 parties du polymère élastomère sulfoné, neutralisé.

11. Procédé selon l'une quelconque des revendications précédentes, caractérisé en ce que la matière de charge a un pH inférieur à 8 environ.

12. Procédé selon l'une quelconque des revendications 1 à 10, caractérisé en ce que le polymère et la matière de charge sont également mélangés avec une huile de dilution.

13. Procédé selon l'une quelconque des revendications précédentes, caractérisé en ce que la concentration en huile de dilution est de 20 à 200 parties en poids pour 100 parties du polymère élastomère sulfoné, neutralisé.

14. Procédé selon la revendication 13, caractérisé en ce que la concentration de l'huile de dilution est de 25 à 150 parties en poids pour 100 parties du polymère élastomère sulfoné, neutralisé.

15. Procédé selon l'une quelconque des revendications précédentes, caractérisé en ce que ladite huile est une huile naphténique, aromatique ou paraffinique ou un mélange de ces huiles.

16. Procédé selon la revendication 15, caractérisé en ce que ladite huile est une huile paraffinique ayant une masse moléculaire moyenne en nombre Mn de 300 à 1000.

17. Procédé selon l'une quelconque des revendications 12 à 16, caractérisé en ce que le mélange de polymère, de matière de charge et d'huile comprend également du silicate de calcium.

18. Procédé selon l'une quelconque des revendications précédentes, caractérisé en ce que le polymère élastomère sulfoné, neutralisé, est un dérivé sulfoné de caoutchouc butyle, de caoutchouc halogéno-butyle ou un terpolymère d'EPDM, ledit caoutchouc butyle étant le copolymère obtenu en polymérisant de 70 à 99,5% en poids d'une isooléfine en $C_4$ à $C_7$ et de 0,5 à 30% en poids d'une multioléfine conjugée en $C_{14}$, et l'EPDM étant un terpolymère contenant des unités dérivées de l'éthylène et du propylène dans le squelette et des unités dérivés d'un diène dans la chaîne latérale.

**Patentansprüche**

1. Verfahren zur Herstellung einer Zusammensetzung, die ein neutralisiertes, sulfoniertes elastomeres Produkt aus einer Säureform eines sulfonierten, elastomeren, olefinisch ungesättigten Polymers mit 5 bis 60 Milliäquivalenten nicht sulfonierten Sulfonatgruppen je 100 g sulfoniertem, elastomerem Polymer und einem Wassergehalt von weniger als 15 Gew.% enthält, dadurch gekennzeichnet, daß
   a) das sulfonierte, elastomere Polymer zur Bildung einer Mischung mit mindestens einem Füllstoff vermischt wird, wobei der Füllstoff Ruß, Calciumcarbonat, Talk, Siliziumdioxid, ein Ton oder eine Mischung derselben ist,
   b) diese Mischung bei weniger als 66°C bis zum Erreichen eines homogenen Zustands gemischt wird und
   c) entweder während oder nach den Stufen a) und b) ein Neutralisierungsmittel in einer Menge von mindestens 100% der stöchiometrisch erforderlichen Menge zugesetzt wird und weiterhin bei weniger als 66°C gemischt wird, um das sulfonierte, elastomere Polymer in der homogenen Mischung mindestens teilweise zu neutralisieren und dadurch ein metall- oder ammoniumneutralisiertes, sulfoniertes, elastomeres Polymer zu bilden.

2. Verfahren nach Anspruch 1, dadurch gekennzeichnet, daß das zumindest teilweise neutralisierte Polymer einer Abschlußbehandlung unterworfen wird, um eine vollständige Neutralisation zu bewirken.

3. Verfahren nach Anspruch 2, dadurch gekennzeichnet, daß die weitere Neutralisation durch ein Extrusion-, Injecktions-oder Kompressions-Formverfahren bewirkt wird.

4. Verfahren nach jedem der vorangegangenen Ansprüche, dadurch gekennzeichnet, daß das Neutralisierungsmittel ein basisches Salz einer Karbonsäure ist, dessen Kation Aluminium, Blei, Eisen, Antimon, Ammonium, ein Metall der Gruppen I-A, II-A, I-B oder II-B des periodischen Systems der Elemente (IUPAC 1965 Revision) oder eine Mischung derselben ist.

5. Verfahren nach Anspruch 4, dadurch gekennzeichnet, daß das Kation Silicium, Calcium, Barium, Natrium, Zink, Magnesium oder eine Mischung derselben ist.

6. Verfahren nach jedem der Ansprüche 1 bis 4, dadurch gekennzeichnet, daß das Neutralisierungsmittel ein Stearat von Lithium, Natrium, Barium, Zink, Magnesium, Blei oder Calcium ist.

7. Verfahren nach jedem der Ansprüche 1 bis 3, dadurch gekennzeichnet, daß das Neutralisierungsmittel ein Metalloxid ist.

8. Verfahren nach Anspruch 7, dadurch gekennzeichnet, daß das Metalloxid Zinkoxid, Magnesiumoxid, Calciumoxid, Bariumoxid, Bleiperoxid oder Mennige ($Pb_3O_4$) ist.

9. Verfahren nach jedem der vorangegangegen Ansprüche, dadurch gekennzeichnet, daß die Menge des Füllstoffs 5 bis 300 Gewichtsteile bezogen auf 100 Teile des neutralisierten, sulfonierten, elastomeren Polymers beträgt.

10. Verfahren nach Anspruch 9, dadurch gekennzeichnet, daß die Menge des Füllstoffes 25 bis 200 Gewichtsteile bezogen auf 100 Teile des neutralisierten, sulfonierten, elastomeren Polymers beträgt.

11. Verfahren nach jedem der vorangegangenen Ansprüche, dadurch gekennzeichnet, daß der Füllstoff einen pH-Wert von weniger als etwa 8 besitzt.

12. Verfahren nach jedem der Ansprüche 1 bis 10, dadurch gekennzeichnet, daß das Polymer und der Füllstoff zusätzlich mit einem Streckmittelöl vermischt werden.

13. Verfahren nach jedem der vorangegangenen Ansprüche, dadurch gekennzeichnet, daß die Konzentration des Streckmittelöls 20 bis 200 Gewichtsteile bezogen auf 100 Teile des neutralisierten, sulfonierten, elastomeren Polymers beträgt.

14. Verfahren nach Anspruch 13, dadurch gekennzeichnet, daß die Konzentration des Streckmittelöls 25 bis 150 Gewichtsteile bezogen auf 100 Teile des neutralisierten, sulfonierten, elastomeren Polymers beträgt.

15. Verfahren nach jedem der vorangegangenen Ansprüche, dadurch gekennzeichnet, daß das Öl ein naphthenisches, aromatisches oder paraffinisches Öl oder eine Mischung derselben ist.

16. Verfahren nach Anspruch 15, dadurch gekennzeichnet, daß das Öl ein paraffinisches Öl mit einem $\overline{M}n$ von 300 bis 1000 ist.

17. Verfahren nach jedem der Ansprüche 12 bis 16, dadurch gekennzeichnet, daß die Mischung aus Polymer, Füllstoff und Öl zusätzlich Calciumsilikat enthält.

18. Verfahren nach jedem der vorangegangenen Ansprüche, dadurch gekennzeichnet, daß des neutralisierte, sulfonierte, elastomere Polymer ein sulfoniertes Derivat von Butylgummi, Halobutylgummi oder einem EPDM-Terpolymer ist, wobei das Butylgummi das durch Polymerisieren von 70 bis 99,5 Gew.% eines $C_4$—$C_7$-Isoolefins und 0,5 bis 30 Gew.% eines konjugierten $C_4$—$C_{14}$-Multiolefins erhaltene Copolymer und das EPDM-Terpolymer ein Terpolymer ist, das im Gerüst von Etylen und Propylen herrührende Einheiten und in der Seitenkette von einem Dien herrührende Einheiten enthält.